Europäisches Patentamt

European Patent Office

Office européen des brevets

(11) Publication number: **0 492 687 A1**

# EUROPEAN PATENT APPLICATION

(21) Application number: **91203141.6**

(22) Date of filing: **29.11.91**

(51) Int. Cl.5: **B64C 25/34**, B60G 5/00

(30) Priority: **20.12.90 US 631670**

(43) Date of publication of application:
**01.07.92 Bulletin 92/27**

(84) Designated Contracting States:
**DE FR GB IT NL**

(71) Applicant: **THE BOEING COMPANY**
**P.O. Box 3707 M.S. 6Y-25**
**Seattle WA 98124-2207(US)**

(72) Inventor: **Ralph, Harry C.**
**13248 85th Avenue N.E.**
**Kirkland, WA 98034(US)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Landing gear truck with wheel load equalization.**

(57) A wheel truck (10) for an aircraft landing gear carries a plurality of wheel sets (16,18,20,22), each set having a left-hand wheel and a right-hand wheel. The wheels of any given set are free to rotate about a longitudinal axis (58,60) so that they will follow transverse ground contours as the aircraft taxis. Each wheel set, as a whole, can also pivot about a transverse axis (28,30), in order to adaptively follow longitudinal ground contours. The pivotable mounting arrangement of the wheels to the truck (10) enables all wheels to maintain an equal force contact with the ground, so that one wheel will not be overloaded relative to another.

EP 0 492 687 A1

## Technical Field

This invention relates to aircraft landing gear, and more particularly, to multi-wheeled landing gear trucks that are used in conjunction with large aircraft.

## Related Applications

The invention disclosed here is related to the subject matter of copending U.S. Patent Application Serial No.         , filed on or about December   , 1990. The inventor of the present case is named as a joint inventor there.

## Background Information

The landing gear of many large aircraft have multi-axled trucks that carry a plurality of wheels. As the skilled person would know, landing gear wheels are typically mounted to a truck in sets of two wheels; one wheel on the left-hand side of the landing gear prop structure, and the other on the right-hand side. The length of the truck is proportionally related to the number of wheel sets that it carries. Many trucks carry two wheel sets, and some may carry as many as three or four. A truck with two wheel sets has a total of four wheels, and is commonly referred to as a "two by two" configuration, because it is two wheels wide, and two wheels deep. Similarly, trucks with three and four wheel sets are referred to as "two by three" and "two by four" configurations, respectively.

It is desirable to maintain equal force-loading on each wheel of a truck while the aircraft is on the ground. Unequal loads adversely affect overall brake performance, tire wear, and the fatigue life of the structural components that mount individual wheels to the truck, including other related structural components. As is well-known, aircraft have grown larger over the last several decades. Landing gear wheel trucks have correspondingly become longer, because the increased weight of larger aircraft has dictated a requirement for more load bearing wheels. "Two by three" or "two by four" trucks now appear to be the design of choice for many aircraft, including the next generation SST (supersonic transport). Because these trucks respectively carry six or eight wheels, their length makes them more susceptible to depressions and humps in runway surfaces.

By way of example, a long wheel truck running over a hump may have some of its wheels out of contact with the ground at one time or another. This places a higher than normal load on the wheels remaining in contact, and in the long-term, creates the adverse effects described above. A similar thing happens when a long truck runs over a depression.

The invention disclosed here provides a solution to the above problem. As will become apparent, the present invention is an improved wheel truck that is designed to maintain equal or nearly equal loads on each wheel mounted to the truck, regardless of terrain contours on a runway surface.

## Summary of the Invention

An improved wheel truck in accordance with the invention includes a wheel frame that is mounted to a lower end portion of a landing gear prop structure. The wheel frame carries a plurality of wheel sets that roll along the ground as the aircraft taxis. Each wheel set includes at least two wheels; one wheel being positioned on one transverse side of the landing gear prop structure, and the other wheel being positioned on the other transverse side. Each wheel set is rotatable about a longitudinal axis that is generally aligned with the direction of aircraft taxiing. This permits the vertical height of one wheel to vary with respect to that of the other as the truck rolls along the ground, depending on how runway surface contours change in the transverse direction.

In addition to the above-described rotation about a longitudinal axis, each wheel set is mounted to the truck in a manner so that each set is further pivotable, as a whole, relative to a transverse axis. This enables the vertical height of a complete set to vary with respect to the vertical height of another complete set. The end result is that the various wheel sets of a given truck can independently adjust to changes in longitudinal ground contour as well.

An advantage of the wheel truck disclosed here is that it permits each individual wheel of the truck to automatically adjust its height as the ground contour changes in any direction, and to thereby always remain in contact with the ground. This ensures that the force-loading on each wheel will remain equal, or nearly so.

The invention as summarized above will become more clearly understood upon consideration of the following description, which is to be read in conjunction with the appended drawings.

## Brief Description of the Drawings

In the drawings, like reference numerals and letters refer to like parts throughout the various views, and wherein:

Fig. 1 is a side view of an SST-style aircraft having a landing gear truck in accordance with the invention;

Fig. 2 is an enlarged side view of a "two by four" wheel truck in accordance with the invention;

Fig. 3 is a view like Fig. 2, but shows how the wheel truck adapts to changes in longitudinal ground contours;

Fig. 4 is an enlarged side view of a "two by two" wheel truck in accordance with the invention;

Fig. 5 is a rearward view of the wheel truck shown in Fig. 4, and illustrates how the truck adapts to transverse ground contours;

Fig. 6 is a side view of a "two by three" wheel truck in accordance with the invention;

Fig. 7 is an enlarged side view of a "two by four" wheel truck in accordance with the invention; and

Fig. 8 is a rear view of the wheel truck shown in Fig. 7.

Best Mode for Carrying out the Invention

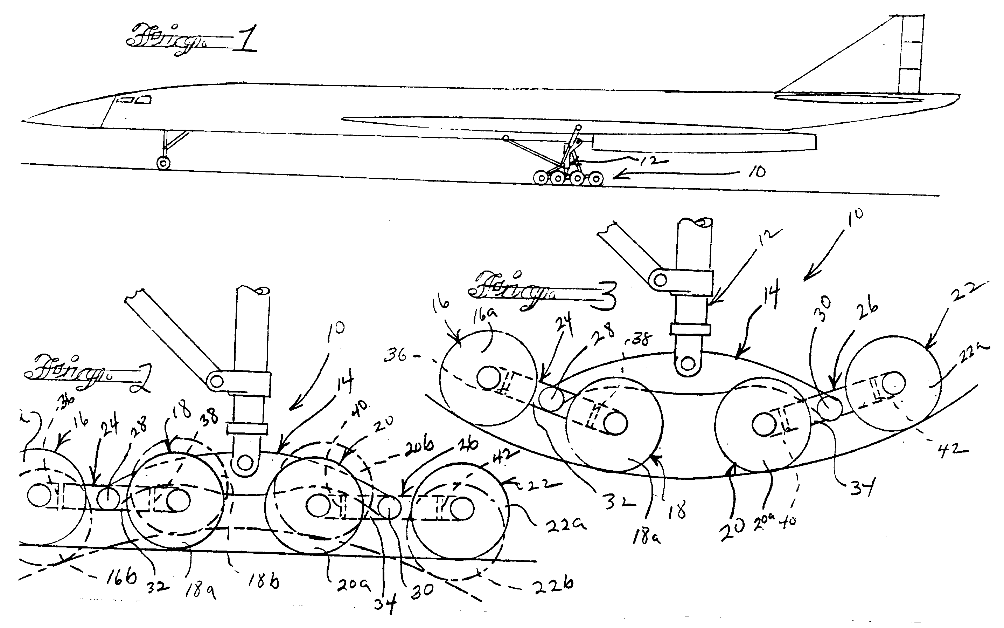

Referring now to the drawings, and first to Fig. 1., indicated generally at 10 is a wheel truck constructed in accordance with the invention. The truck 10 is shown pivotally mounted to the lower end of a landing gear prop structure 12. The truck and prop structure 10, 12 generally work in the same way as most modern-day landing gear. That is, the truck 10 is swung between a stowed and lowered condition, depending on whether the aircraft is in a flight mode or on the ground.

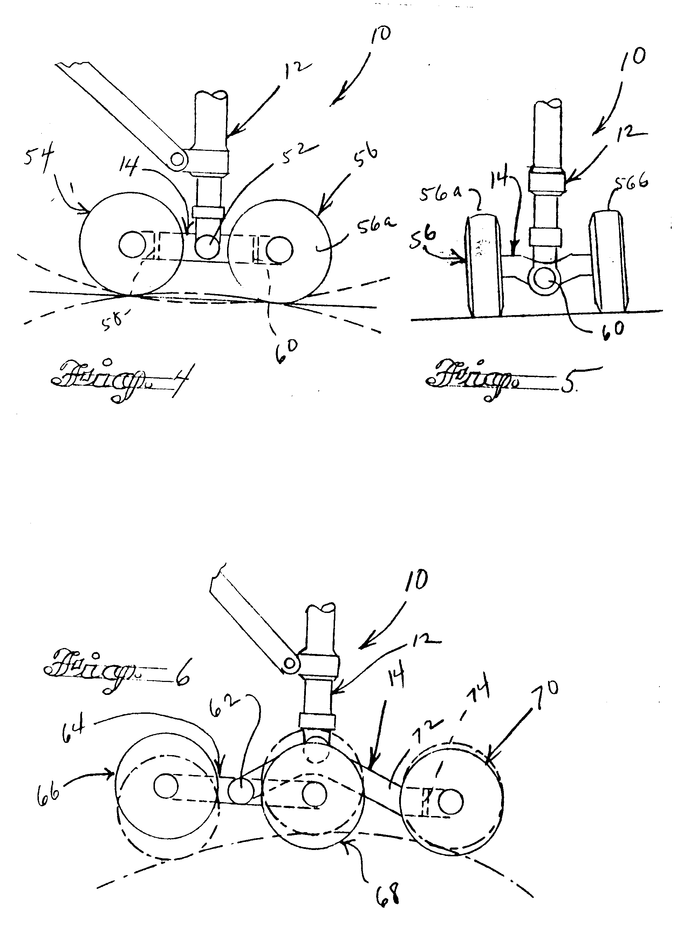

Referring now to Fig. 2, the truck 10 shown there is a "two by four" truck constructed in accordance with the invention. That is, the truck has a frame 14, and four wheel sets 16, 18, 20, 22. Each wheel set consists of two wheels 16a, 16b, 18a, 18b, 20a, 20b, 22a, 22b. One wheel of each set 16, 18, 20, 22 is on opposite sides of the landing gear prop structure 12. A good view of this configuration is shown at 22a, 22b in Fig. 8, which is an aft view of the rearwardmost wheel set of the truck 10 shown in Fig. 7.

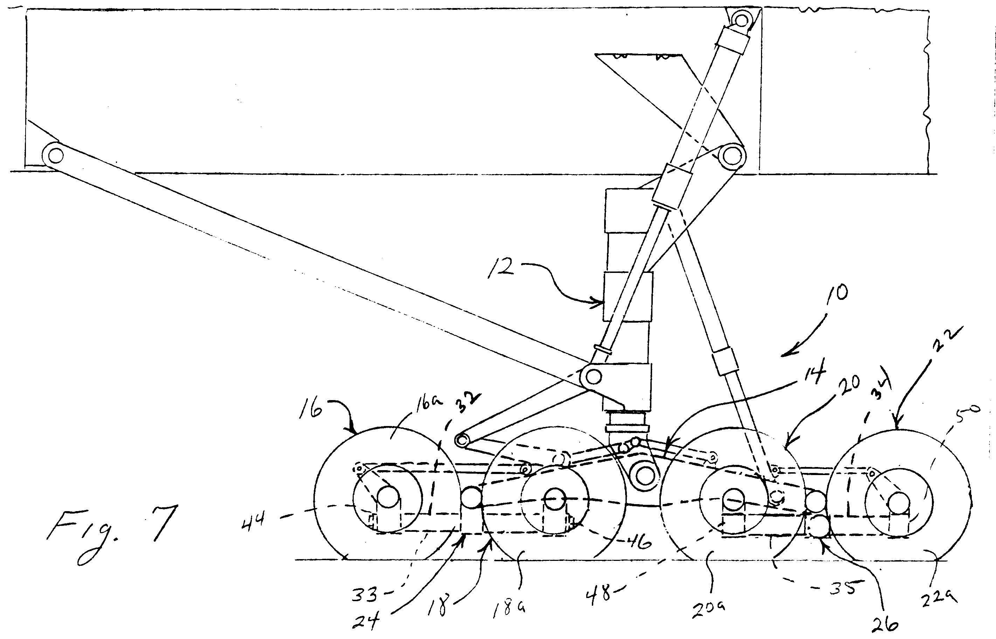

Directing attention now to both Figs. 2 and 3, the "two by four" truck shown there has two separate wheel carriages 24, 26 pivotably mounted to frame 14. The frame 14 has a first pivot connection point 28 that defines a transversely extending pivot axis at a forward position relative to prop structure 12. Similarly, a second pivot connection point 30 is positioned rearwardly or aft of prop structure 12, and defines a transversely extending pivot axis there. Carriage 24 is connected to frame 14 at connection point 28, and may rotate or turn freely in either a clockwise or counterclockwise direction relative to the transverse axis defined by the pivot point. The aft carriage 26 is similarly connected to frame 14 at connection point 30.

Both forward and aft carriages 24, 26 have their own frames 32, 34, and each carriage has a leading set of wheels 16, 20 and a trailing set of wheels 18, 22. As the truck 14 rolls over the ground, carriages 24, 26 pivot so that their respective wheel sets will follow the ground's longitudinal contour in the direction of aircraft taxiing movement. Fig. 3 shows how the wheels would travel through a depression in a runway surface, for example.

In addition to adapting to changes in terrain contour in the longitudinal direction, the wheel sets 16, 18, 20, 22 of truck 10 also have the capability of adapting to transverse contours. Each wheel set of carriages 24, 26 is freely pivotable in clockwise or counterclockwise directions relative to the respective longitudinal axes of carriage frames 32, 34. In another words, forward and leading wheel sets 16, 18 may pivot transversely at 36, 38, respectively, while wheel sets 20, 22 of carriage 26 may pivot at 40, 42.

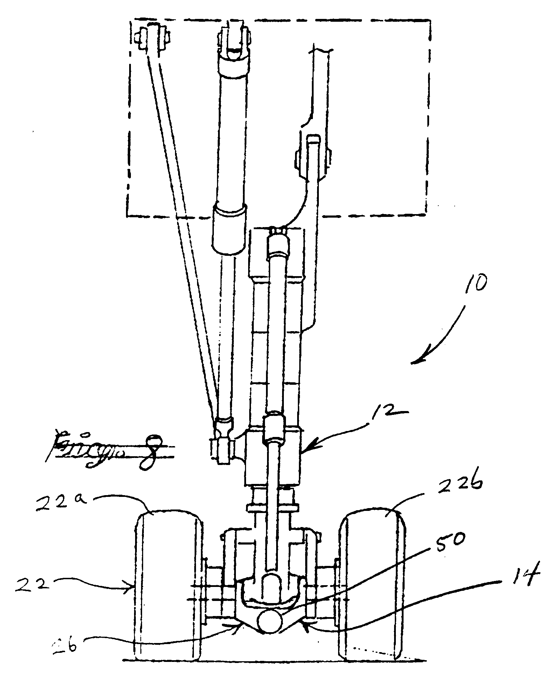

As is best seen in Figs. 2 and 5, transverse pivoting enables the vertical height of one wheel in any given set to adjust relative to the height of the other wheel in the same set. In Fig. 2, for example, the wheels 16a, 18a, 20a, 22a on one side of the truck 10 are shown at the same height, corresponding to a level ground surface under those particular wheels. However, the wheels 16b, 18b, 20b, 22b on the other side of the prop structure 12 are of varying heights corresponding to contours there in both longitudinal and transverse directions.

Fig. 7 shows an alternative "two by four" embodiment that works in the same way as the truck shown in Figs. 2 and 3. In Fig. 7, each carriage frame 32, 34 has a cylindrical beam 33, 35 generally aligned with the direction of aircraft movement. Wheel sets 16, 18, 20, 22 are pivotably mounted to the opposite ends 44, 46, 48, 50, respectively, of these beams 33, 35.

Figs. 4 and 5 show a "two by two" truck 10 in accordance with the invention. There, the truck frame 14 is pivotably connected to the lower end of landing gear prop structure 12, as shown at 52. Since this particular truck 10 has but two sets of wheels 54, 56, the individual wheels of each set will adequately follow longitudinal ground contours without any need for other pivotal connections about a transverse axis. However, each wheel set 54, 56 pivots transversely about a longitudinal axis as shown at 58, 60, in order to follow transverse ground contours. This is best seen in Fig. 5, which shows the wheels 56a, 56b of the aft set 56.

Fig. 6 shows a "two by three" truck having a forward transverse pivot connection point 62 to which a forward wheel carriage 64 is mounted. The forward wheel carriage 64 has two sets of wheels 66, 68, and is otherwise identical in all significant respects to the forward and rear wheel carriages 24, 26 shown in Figs. 2 and 3.

In Fig. 6, a third set of wheels 70 is mounted to an aft portion 72 of truck frame 14. Wheel set 70 is mounted so that it may pivot at 74, to account for transverse ground contours, but otherwise does not pivot for longitudinal contours. The vertical height of the wheel sets 66, 68 in the forward carriage 64 will adequately adjust to longitudinal contours so that all three wheel sets 66, 68, 70 will, in combination, remain in contact with the ground.

It is to be understood that the preceding description sets forth the best mode for carrying out the invention as it is presently known. Of the alternative embodiments presented above, it is not known whether one works better than another as a general rule. However, one may work better than another for a given aircraft design. The preceding description should not be viewed in a limiting sense, nor should it be viewed as defining the scope of what is considered to be the invention. The scope of the invention is instead defined solely by the patent claim or claims which follow, the interpretation of which is to be made in accordance with the well-established doctrines of patent claims interpretation.

## Claims

1. An improved wheel truck for use on an aircraft landing gear, comprising:

a wheel frame mounted to a lower end portion of a landing gear prop structure, said wheel frame carrying a plurality of wheel sets that roll along the ground when the aircraft taxis, each wheel set including at least two wheels, with at least one wheel of said set being positioned on one transverse side of said landing gear prop structure, and at least one other wheel of said set being positioned on the other transverse side of said landing gear prop structure, and further, each wheel set being rotatable relative to a longitudinal axis that is generally aligned with the direction of aircraft taxiing in a manner so that the vertical height of said at least one wheel may vary with respect to the vertical height of said at least one other wheel depending on transverse ground contour.

2. The wheel truck of claim 1, wherein each wheel set is further pivotable relative to a transverse axis, in a manner so that the vertical height of any one wheel set may vary with respect to the vertical height of any other wheel set, depending on the ground contour in the direction of aircraft taxiing.

3. The wheel truck of claim 1, including first pivot means for defining a transverse pivot axis forwardly of said landing gear prop structure, and a wheel carriage connected to said first pivot means for rotation relative to said transverse pivot axis, said wheel carriage having a leading set of wheels, and a trailing set of wheels; and

axle means positioned rearwardly of said landing gear prop structure, for mounting at least one wheel set aft of said landing gear prop structure.

4. The wheel truck of claim 1, including

first pivot means for defining a transverse pivot axis forwardly of said landing gear prop structure, and a wheel carriage connected to said first pivot means for rotation relative to said transverse pivot axis, and

second pivot means for defining another transverse pivot axis rearwardly of said landing gear prop structure, and a second wheel carriage connected to said second pivot means for rotation relative to said rearward transverse pivot axis, and further,

each of said first and second wheel carriages having a leading set of wheels, and a trailing set of wheels, and longitudinal pivot means for permitting each wheel set of each carriage to rotate relative to an axial direction that generally follows the direction of aircraft taxiing.

Fig. 4

Fig. 5

Fig. 6

Fig. 7

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 361 549 (BOEING)<br>* column 2, line 50 - column 4, line 1 *<br>* column 5, line 26 - column 5, line 46; figures 1-3,5 *<br>--- | 1,2 | B64C25/34<br>B60G5/00 |
| A | US-A-3 643 898 (WHITENER)<br>* column 3, line 16 - column 3, line 67; figures 1,2 *<br>--- | 1 | |
| A | FR-A-898 049 (MESSERSCHMITT)<br>* the whole document *<br>--- | 1 | |
| A | DE-C-728 620 (HOFFMANN)<br>* the whole document *<br>--- | 1 | |
| A | US-A-3 471 166 (CLARK)<br>* column 2, line 14 - column 2, line 26 *<br>* column 3, line 36 - column 4, line 63; figures 7,10,11 *<br>--- | 1-3 | |
| A | US-A-2 398 248 (REID)<br>* the whole document *<br>--- | 1-3 | TECHNICAL FIELDS SEARCHED (Int. Cl.5 ) |
| A | US-A-3 810 516 (REIMER)<br>* column 2, line 48 - column 2, line 64; figures 1,2 *<br>----- | 4 | B64C<br>B60G |

The present search report has been drawn up for all claims

| Place of search | Date of completion of the search | Examiner |
|---|---|---|
| THE HAGUE | 07 APRIL 1992 | ZERI A. |